# EUROPÄISCHE PATENTSCHRIFT

(11) **EP 4 013 636 B1**
(45) Veröffentlichungstag und Bekanntmachung des Hinweises auf die Patenterteilung: **25.09.2024**
(21) Anmeldenummer: 19762322.6
(22) Anmeldetag: 12.08.2019
(51) Int. Cl.: B60L 5/20, B60L 5/32

(54) **ANTRIEBSYSTEM FÜR EINEN STROMABNEHMER UND VERFAHREN ZUM ANHEBEN ODER ABSENKEN**
DRIVE SYSTEM FOR A CURRENT COLLECTOR AND METHOD FOR RAISING OR LOWERING
SYSTÈME D'ENTRAÎNEMENT POUR UN COLLECTEUR DE COURANT ET PROCÉDÉ DE MONTÉE OU D'ABAISSEMENT

(43) Veröffentlichungstag der Anmeldung: 22.06.2022
(73) Patentinhaber: Schunk Transit Systems GmbH, 5151 Nussdorf am Haunsberg (AT)
(72) Erfinder: GRUBER, Alexander, 5114 Göming (AT)
(74) Vertreter: advotec.
(86) Internationale Anmeldenummer: PCT/EP2019/071626
(87) Internationale Veröffentlichungsnummer: WO 2021/028019

(56) Entgegenhaltungen:
- EP-A1- 0 311 048
- CN-U- 202 294 326
- CN-U- 206 344 692
- CN-U- 208 149 090
- DE-A1- 10 324 790
- DE-T2- 69 329 314
- JP-A- 2007 189 754
- JP-A- S5 546 805
- US-A- 4 745 997

## Beschreibung

Die Erfindung betrifft ein Antriebsystem sowie ein Verfahren zum Anheben oder Absenken zumindest eines Schleifstücks eines Stromabnehmers für Schienenfahrzeuge, wobei das Schleifstück an einer mit dem Antriebsystem verstellbaren Positioniervorrichtung des Stromabnehmers angeordnet und mit einer Andruckkraft zur Anlage gegen eine Fahrleitung bringbar ist, wobei das Antriebsystem einen mit Druckluft betätigbaren Balgantrieb zur Betätigung der Positioniervorrichtung, eine pneumatische Steuereinheit mit einem Steuerventil zur Zuleitung oder Abführung von Druckluft für den Balgantrieb, und eine Absenkeinheit mit einer pneumatischen Detektorleitung und einem Absenkventil zur Entlüftung des Balgantriebs bei einem Druckverlust in der Detektorleitung umfasst. Eine ähnliche Anordnung ist bekannt aus dem Gebrauchstmuster CN208149090 U (Xie Aihua).

Schleifstücke aus Grafit werden regelmäßig zur Energieübertragung von einem Fahrdraht auf ein Fahrzeug, wie beispielsweise eine Lokomotive verwendet. Bei einer starken Abnutzung oder Beschädigung des Schleifstücks kann es unter anderem zu einer Beschädigung des Fahrdrahts bzw. einer Oberleitung kommen. Lokomotiven sind daher regelmäßig mit einer Sensorik ausgestattet, die ein Absenken der Schleifleiste mit dem Schleifstück bzw. einer das Schleifstück tragenden Positioniervorrichtung, wie beispielsweise eines sogenannten Pantografen oder dergleichen, bewirkt, wenn eine bestimmte Verschleißgrenze des Schleifstücks überschritten ist oder Beschädigungen am Schleifstück auftreten. Die Sensorik umfasst ein Sensorelement, welches als beispielsweise ein fluiddichter Kanal oder als ein Rohrprofil in dem Schleifstück ausgebildet bzw. angeordnet sein kann. Das Sensorelement bildet so eine Detektorleitung aus, die mit Druckluft beaufschlagt wird. Bei Erreichen einer Verschleißgrenze oder bei einer Beschädigung des Schleifstücks kommt es zu einem Anschleifen der Detektorleitung und zu einem Entweichen von Druckluft. Der Druckverlust in der Detektorleitung kann detektiert werden, worauf ein Absenken des Schleifstücks mit der Positioniervorrichtung erfolgt. Eine ähnliche Anordnung ist bekannt aus der Patentanmeldung EP0311048 A1 (Siemens AG).

Um Beschädigungen zu vermeiden, ist es wesentlich, dass ein Absenken des Schleifstücks von der Fahrleitung möglichst schnell erfolgt, weshalb dies mit einer speziell dazu ausgebildeten Absenkeinheit ausgeführt wird. Im Unterschied zur Steuereinheit, mit der ein reguläres Anheben und Absenken des Schleifstücks gesteuert bzw. ausgeführt wird, soll mit der Absenkeinheit ein vergleichsweise schnelles Absenken des Schleifstücks bei einer Detektion eines Druckverlustes bewirkt werden. Die Absenkeinheit weist daher regelmäßig ein an die Detektorleitung angeschlossenes Absenkventil auf, welches ein Differenzdruckventil ist. Das Differenzdruckventil ist unmittelbar an einem Balgantrieb zum Anheben oder Absenken der Schleifleiste mit der Positioniervorrichtung angeschlossen, so dass der Balgantrieb schnell entlüftet werden kann. Eine Entlüftung über die Steuereinheit ist zwar prinzipiell auch möglich, wobei diese jedoch aufgrund der langen Leitungswege und in einer pneumatischen Schaltung der Steuereinheit enthaltene Ventile keine schnelle Entlüftung erlaubt. Bei einer Detektion eines Druckabfalls durch das Differenzdruckventil wird eine Versorgungsleitung des Balgantriebs von dem Differenzdruckventil so geöffnet, dass die im Balgantrieb enthaltene Druckluft ungehindert an der Versorgungsleitung entweichen kann.

Bei dem Differenzdruckventil kann es sich um ein 2/2-Wegeventil handeln, welches beispielsweise als ein Membranventil ausgeführt ist. Nach einer Reparatur oder einem Austausch der Detektorleitung bzw. des Schleifstücks kann ein Anheben des Schleifstücks erst wieder nach einer Rückstellung des Differenzdruckventils bzw. einer Behebung eines Schadens, welcher zu einem Druckverlust geführt hat, erfolgen, da sonst Druckluft aus der Versorgungsleitung entweichen würde. Wie sich gezeigt hat, ist eine allgemeine Funktion des Differenzdruckventils, wie beispielsweise eine Rückstellung des Differenzdruckventils bei sehr hohen oder auch niedrigen Temperaturen nicht verlässlich gegeben.

Der vorliegenden Erfindung liegt daher die Aufgabe zugrunde, ein Antriebsystem sowie ein Verfahren zum Anheben oder Absenken eines Schleifstücks eines Stromabnehmers vorzuschlagen, welches einen verlässlichen Betrieb des Antriebsystems ermöglicht.

Diese Aufgabe wird durch ein Antriebsystem mit den Merkmalen des Anspruchs 1, einen Stromabnehmer mit den Merkmalen des Anspruchs 13 sowie ein Verfahren mit den Merkmalen des Anspruchs 14 gelöst.

Mit dem erfindungsgemäßen Antriebsystem zum Anheben oder Absenken zumindest eines Schleifstücks eines Stromabnehmers für Schienenfahrzeuge kann das Schleifstück an einer mit dem Antriebsystem verstellbaren Positioniervorrichtung des Stromabnehmers angeordnet und mit einer Andruckkraft zur Anlage gegen eine Fahrleitung gebracht werden, wobei das Antriebsystem einen mit Druckluft betätigbaren Balgantrieb zur Betätigung der Positioniervorrichtung, eine pneumatische Steuereinheit mit einem Steuerventil zur Zuleitung oder Abführung von Druckluft zu dem Balgantrieb, und eine Absenkeinheit mit einer pneumatischen Detektorleitung und einem Absenkventil zur Entlüftung des Balgantriebs bei einem Druckverlust in der Detektorleitung umfasst, wobei das Absenkventil ein 3/2-Wegeventil ist, wobei das Absenkventil in einer pneumatischen Versorgungsleitung zwischen dem Steuerventil und dem Balgantrieb angeordnet ist.

Das erfindungsgemäße Antriebsystem ist demnach so ausgebildet, dass mit der Steuereinheit bzw. deren Steuerventil dem Balgantrieb zum Anheben oder Absenken des Schleifstücks über die Positioniervorrichtung Druckluft zugeleitet oder abgeführt werden kann. Zusätzlich weist das Antriebsystem die Absenkeinheit auf, die die Detektorleitung umfasst, und mit der ein Druckverlust in der Detektorleitung festgestellt werden kann. Das Absenkventil ist hier als ein 3/2-Wegeventil ausgebildet und in der Versorgungsleitung des Balgantriebs zwischen dem Steuerventil und dem Balgantrieb angeordnet. Das 3/2-Wegeventil ermöglicht durch diese Anordnung eine schnelle Entlüftung des Balgantriebs noch vor dem Steuerventil. Insbesondere durch die Ausbildung des Absenkventils durch ein 3/2-Wegeventil wird es möglich, dieses direkt in der Versorgungsleitung des Balgantriebs anzuordnen. Mit dem 3/2-Wegeventil kann die Versorgungsleitung von dem Steuerventil zu dem Balgantrieb in einer ersten Schaltposition auf einen Durchgang für Druckluft geschaltet werden und in einer zweiten Schaltposition gegenüber dem Steuerventil abgetrennt werden, sodass dann über das 3/2-Wegeventil Druckluft aus dem Balgantrieb direkt in eine Umgebung entweichen kann.

Insbesondere kann dann auch vorgesehen sein, dass das 3/2-Wegeventil in einer rückgestellten Schaltposition stets Druckluft aus dem Balgantrieb entweichen lässt. Weiter kann das 3/2-Wegeventil mit beispielsweise Druckluft in der Detektorleitung betätigt werden. So ist dann immer sichergestellt, dass bei einem Druckluftverlust in der Detektorleitung ein Umschalten des 3/2-Wegeventils in die Schaltposition erfolgt, bei der Druckluft aus dem Balgantrieb entweicht. Da ein 3/2-Wegeventil bei der hier vorgesehenen Anwendung vergleichsweise verlässlicher ist als ein 2/2-Wegeventil bzw. Differenzdruckventil, kann auch ein Anheben des Schleifstücks nach einer Reparatur oder einem Austausch der Detektorleitung ohne eine unerwünschte Blockade des Absenkventils verlässlich erfolgen.

Besonders vorteilhaft ist es, wenn das Absenkventil ein federrückstellbares 3/2-Wegeventil ist. Mit der Federrückstellung kann das Absenkventil dann in eine Schaltposition bewegt werden, bei der der Balgantrieb schnell entlüftet wird. So kann dann in jedem Fall sichergestellt werden, dass bei einem Druckverlust in der Detektorleitung das Schleifstück abgesenkt wird. Das Absenkventil kann pneumatisch über die Detektorleitung betätigbar sein, derart, dass bei einem Arbeitsdruck in der Detektorleitung das Absenkventil die Versorgungsleitung öffnet und bei einem Druckverlust in der Detektorleitung das Absenkventil die Versorgungsleitung gegenüber dem Steuerventil schließt und den Antriebsbalg entlüftet. Die pneumatische Betätigung des Absenkventils bzw. des 3/2-Wegeventils kann durch einen Arbeitsdruck in der Detektorleitung erfolgen. Tritt ein Druckverlust relativ zum Arbeitsdruck in der Detektorleitung auf, kann das Absenkventil in die Schaltposition rückgestellt werden, die den Antriebsbalg entlüftet.

Die Detektorleitung kann an eine zweite pneumatische Versorgungsleitung der Steuereinheit zur Ausbildung des Arbeitsdrucks in der Detektorleitung angeschlossen sein, wobei in der zweiten Versorgungsleitung ein Drosselventil der Absenkeinheit angeordnet sein kann. Über die zweite Versorgungsleitung kann die Detektorleitung wieder mit Druckluft soweit befüllt werden, bis ein Arbeitsdruck in der Detektorleitung erreicht ist. Dadurch, dass in der zweiten Versorgungsleitung das Drosselventil angeordnet ist, wird der Arbeitsdruck nach einem Druckverlust in der Detektorleitung zeitverzögert ausgeglichen. Dies bedeutet, dass es bei einem Druckverlust in der Detektorleitung zu einer Schaltung des Absenkventils kommt, da der Druckverlust in der Detektorleitung nicht schnell genug über die zweite Versorgungsleitung kompensiert werden kann. Andernfalls würde der Druckverlust über die zweite Versorgungsleitung gegebenenfalls ausgeglichen werden, was eine Betätigung des Absenkventils in unerwünschter Weise behindern würde.

Die zweite Versorgungsleitung kann zwischen dem Steuerventil und einer Druckluftquelle oder dem Steuerventil und einem Druckregler zur Ausbildung eines Arbeitsdrucks angeschlossen sein. So kann sichergestellt werden, dass die zweite Versorgungsleitung unabhängig von dem Steuerventil mit Druckluft beaufschlagt werden kann und nicht von einer Schaltposition des Steuerventils beeinflusst ist.

Die Absenkeinheit kann über eine pneumatische Meldeleitung mit der Steuereinheit verbunden sein, wobei die Meldeleitung an einem Druckschalter der Steuereinheit und an die Detektorleitung angeschlossen sein kann. Über die Meldeleitung kann ein Druckverlust in der Detektorleitung bei dem Druckschalter in der Steuereinheit auf pneumatischem Wege übermittelt werden. Über den Druckschalter kann beispielsweise einem Fahrzeugführer eines Schienenfahrzeugs das Absenken des Schleifstücks in Art einer Alarm- oder Statusmeldung signalisiert werden. Weiter kann über den Druckschalter ein Absenken weiterer Schleifstücke an weiteren Stromabnehmern des Schienenfahrzeugs ausgelöst werden. So kann gegebenenfalls eine Beschädigung dieser Schleifstücke verhindert werden.

Die Steuereinheit kann einen weiteren Druckschalter aufweisen, der zwischen dem Steuerventil und dem Balgantrieb an der Versorgungsleitung angeschlossen ist. Über den weiteren Druckschalter kann beispielsweise einem Fahrzeugführer eines Schienenfahrzeugs signalisiert werden, dass die Versorgungsleitung mit Druck beaufschlagt und damit das Schleifstück angehoben ist.

Die Steuereinheit kann an einer Druckluftquelle anschließbar sein und einen Druckregler zur Ausbildung eines Arbeitsdrucks aufweisen. Die Druckluftquelle kann von dem Schienenfahrzeug selbst ausgebildet werden. Mit dem Druckregler kann ein stets konstanter Arbeitsdruck ausgebildet werden. Weiter kann die Steuereinheit noch eine Einrichtung zur Druckluftreinigung und ein Überdruckventil zur Druckbegrenzung aufweisen.

Das Steuerventil kann ein 5/2-Wegeventil sein, wobei das Steuerventil elektromagnetisch betätigbar sein kann. Mit der elektromagnetischen Betätigung kann beispielsweise von einem Fahrzeugführer des Schienenfahrzeugs ein Anheben oder Absenken durch einfache Betätigung eines Schalters initiiert werden. Das 5/2-Wegeventil kann so beschaffen sein, dass zum Anheben des Schleifstücks die Versorgungsleitung unmittelbar mit einer Druckluftquelle in einer ersten Schaltposition verbunden werden kann. In einer zweiten Schaltposition kann über das 5/2-Wegeventil die Druckluftquelle von der Versorgungsleitung abgetrennt bzw. verschlossen sein. Die Versorgungsleitung kann zur Entlüftung des Balgantriebs bzw. zum langsamen Absenken des Schleifstücks durch das 5/2-Wegeventil in eine Umgebung hindurchgeleitet sein. Weiter kann das 5/2-Wegeventil federrückstellbar ausgebildet sein, derart, dass in einer federrückgestellten Schaltposition die Versorgungsleitung entlüftet wird.

Die Steuereinheit kann in der Versorgungsleitung zumindest ein Drosselrückschlagventil aufweisen, wobei das Drosselrückschlagventil zwischen dem Steuerventil und dem Balgantrieb angeschlossen sein kann, wobei mit dem Drosselrückschlagventil dem Balgantrieb über die Versorgungsleitung zugeführte Druckluft drosselbar und von dem Balgantrieb abgeführte Druckluft durchleitbar sein kann oder umgekehrt. Mit dem Drosselrückschlagventil kann ein Anheben oder Absenken des Schleifstücks hinsichtlich einer Anhebe- bzw. Absenkgeschwindigkeit in der gewünschten Weise eingestellt werden. Das Drosselrückschlagventil kann so in der Versorgungsleitung angeordnet sein, dass entweder das Anheben oder das Absenken verlangsamt ist. Gleichwohl können zwei Drosselrückschlagventile in der Versorgungsleitung in einer Reihenschaltung so angeordnet sein, dass das Anheben und das Absenken durch jeweils eines der Drosselrückschlagventile verlangsamt ist.

Die Steuereinheit kann ein weiteres Drosselventil aufweisen, wobei mit dem weiteren Drosselventil dem Balgantrieb über die Versorgungsleitung zugeführte Druckluft oder dem Balgantrieb abgeführte Druckluft drosselbar sein kann. Wenn nur ein Drosselrückschlagventil in der Versorgungsleitung vorgesehen ist, kann beispielsweise das weitere Drosselventil so angeordnet sein, dass bei einem Entlüften der Versorgungsleitung über das Steuerventil das Entlüften mit dem weiteren Drosselventil verlangsamt wird, sodass ein langsames Absenken des Schleifstücks erfolgt. Das weitere Drosselventil kann zu diesem Zweck mit einem Schalldämpfer ausgebildet sein.

Die Steuereinheit, die Absenkeinheit und der Balgantrieb können räumlich voneinander getrennt angeordnet sein. Das Absenkventil bzw. die Absenkeinheit können vorteilhaft in der Nähe des Balgantriebs angeordnet sein, sodass eine schnelle Entlüftung des Balgantriebs sowie eine kurze Verbindung mit der Detektorleitung möglich ist. Die Steuereinheit kann zum Schutz vor unzuträglichen Umwelteinflüssen innerhalb des Schienenfahrzeugs oder in einem gesondert angeordneten Gehäuse auf dem Schienenfahrzeug angeordnet und über entsprechende Druckluftleitungen mit dem Balgantrieb bzw. der Absenkeinheit verbunden sein.

Der erfindungsgemäße Stromabnehmer weist eine Positioniervorrichtung auf und zumindest ein an der Positioniervorrichtung angeordnetes Schleifstück sowie ein pneumatisches Antriebsystem nach der Erfindung. Weitere vorteilhafte Ausführungsformen eines Stromabnehmers ergeben sich aus den Merkmalsbeschreibungen der auf den Anspruch 1 zurückbezogenen Unteransprüche.

Bei dem erfindungsgemäßen Verfahren zum Anheben oder Absenken zumindest eines Schleifstücks eines Stromabnehmers für Schienenfahrzeuge mit einem Antriebsystem wird das Schleifstück an einer mit dem Antriebsystem verstellbaren Positioniervorrichtung des Stromabnehmers angeordnet und mit einer Andruckkraft zur Anlage gegen eine Fahrleitung gebracht, wobei die Positioniervorrichtung mit einem Balgantrieb des Antriebsystems mit Druckluft betätigt wird, wobei von einem Steuerventil einer pneumatischen Steuereinheit des Antriebsystems Druckluft zu dem Balgantrieb zugeleitet oder abgeführt wird, und wobei mit einer pneumatischen Detektorleitung und einem Absenkventil einer Absenkeinheit des Antriebsystems bei einem Druckverlust in der Detektorleitung der Balgantrieb entlüftet wird, wobei als Absenkventil ein rückstellbares 3/2-Wegeventil verwendet wird, wobei das Absenkventil in einer pneumatischen Versorgungsleitung zwischen dem Steuerventil und dem Balgantrieb angeordnet wird. Zu den Vorteilen des erfindungsgemäßen Verfahrens wird auf die Vorteilsbeschreibung des erfindungsgemäßen Antriebsystems verwiesen.

Bei einem erfolgten Druckverlust in der Detektorleitung kann relativ zu einem von einem Druckregler der Steuereinheit ausgebildeten Arbeitsdruck das Absenkventil derart geschaltet werden, dass der Balgantrieb unmittelbar über das Absenkventil entlüftet und das Schleifstück abgesenkt wird.

Bei einer dicht abgeschlossenen Detektorleitung kann diese mit Druckluft bis zum Erreichen eines von einem Druckregler der Steuereinheit ausgebildeten Arbeitsdrucks befüllt werden, wobei bei Erreichen des Arbeitsdrucks in der Detektorleitung das Absenkventil derart geschaltet werden kann, dass der Balgantrieb unmittelbar über die Versorgungsleitung mit Druckluft angetrieben und das Schleifstück angehoben werden kann.

Weitere vorteilhafte Ausführungsformen des Verfahrens ergeben sich aus den Merkmalsbeschreibungen der auf den Anspruch 1 zurückbezogenen Unteransprüche.

Im Folgenden wird die Erfindung unter Bezugnahme auf die beigefügten Zeichnungen näher erläutert.

Es zeigen:
- **Fig. 1**: einen Schaltplan eines Antriebsystems nach dem Stand der Technik;
- **Fig. 2**: einen Schaltplan eines Antriebsystems.

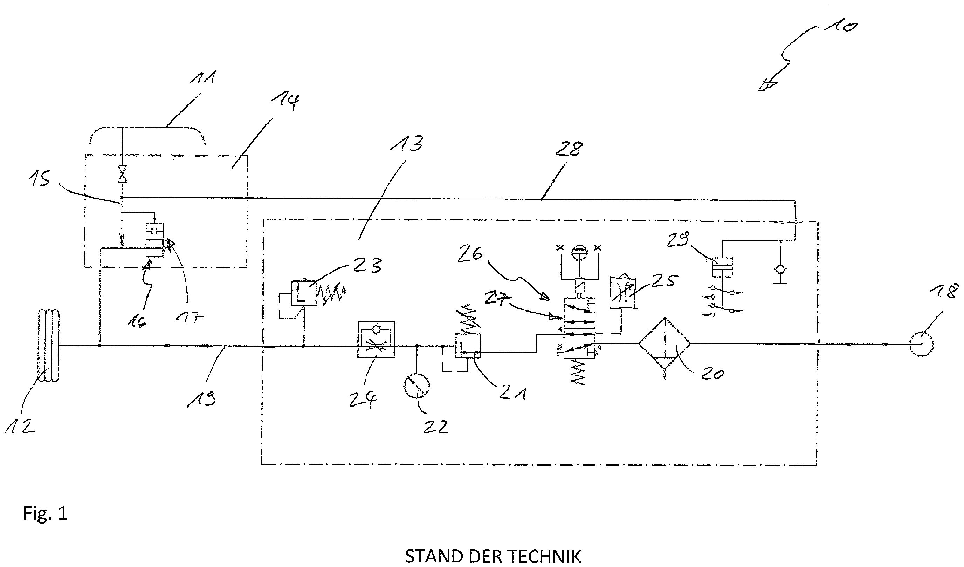

Die **Fig. 1** zeigt einen aus dem Stand der Technik bekannten Schaltplan eines Antriebsystems zum Anheben oder Absenken eines Schleifstücks 11 eines hier nicht weiter dargestellten Stromabnehmers für Schienenfahrzeuge nach dem Stand der Technik. Das Schleifstück 11 ist an einer mit dem Antriebsystem 10 verstellbaren Positioniervorrichtung des Stromabnehmers angeordnet, die ebenfalls hier nicht näher dargestellt ist. Die Positioniervorrichtung kann beispielsweise ein sogenannter Pantograf oder ein anderes Hebelarmsystem sein. Weiter umfasst das Antriebsystem 10 einen Balgantrieb 12 zur Betätigung der Positioniervorrichtung. Durch ein Füllen des Balgantriebs 12 mit Druckluft wird das Schleifstück 11 über die Positioniervorrichtung gegen eine hier nicht dargestellte Fahrleitung zur Anlage gebracht, wobei bei einem Entlüften des Balgantriebs 12 das Schleifstück 11 wieder abgesenkt wird.

Weiter umfasst das Antriebsystem 10 eine Steuereinheit 13 und eine Absenkeinheit 14. Die Absenkeinheit 14 ist aus einer pneumatischen Detektorleitung 15 und einem Absenkventil 16, welches hier durch ein Differenzdruckventil 17 bzw. 2/2-Wegeventil ausgebildet ist, ausgebildet. Die Steuereinheit 13 ist an einer Druckluftquelle 18 angeschlossen und über eine Versorgungsleitung 19 mit dem Balgantrieb 12 verbunden. Die Steuereinheit 13 umfasst einen Druckluftreiniger 20, einen Druckregler 21 zur Ausbildung eines Arbeitsdrucks, ein Manometer 22 zur Anzeige eines Arbeitsdrucks, ein Überdruckventil 23 zur Begrenzung eines Arbeitsdrucks, ein Drosselrückschlagventil 24, ein weiteres Drosselventil 25 und ein Steuerventil 26. Das Steuerventil 26 ist durch ein 5/2-Wegeventil 27 mit elektromagnetischem Antrieb und Federrückstellung ausgebildet.

Bei der in der **Fig. 1** dargestellten Schaltposition des Steuerventils 26 wird der Balgantrieb 12 entlüftet. Die Entlüftung erfolgt dabei über das weitere Drosselventil 25, wodurch ein langsames Absenken des Schleifstücks 11 bewirkt wird. Beim Anheben des Schleifstücks 11 steht das Steuerventil 26 in seiner zweiten Schaltposition, in der die Einleitung von Druckluft in den Balgantrieb 12 über das Drosselrückschlagventil 24 ebenfalls verlangsamt erfolgt.

Bei dem Befüllen des Balgantriebs 12 über die Versorgungsleitung 19 wird die Detektorleitung 15 ebenfalls mit Druck beaufschlagt und das Differenzdruckventil 17 wechselt von der hier dargestellten Schaltposition zur Schnellentlüftung in die zweite Schaltposition des Differenzdruckventils 17, bei der die Versorgungsleitung 19 am Differenzdruckventil 17 dicht gegenüber einer Umgebung abgeschlossen ist. Bei einem Druckverlust in der Detektorleitung 15 wird durch das Differenzdruckventil 17 eine schnelle Entlüftung der Versorgungsleitung bzw. des Balgantriebs 12 aufgrund des Druckunterschieds der Versorgungsleitung 19 und der Detektorleitung 15 ausgelöst.

Weiter ist die Absenkeinheit mit der Steuereinheit 13 über eine Meldeleitung 28 verbunden, die direkt an die Detektorleitung 15 angeschlossen ist. Die Meldeleitung 28 wirkt auf einen Druckschalter 29 der Steuereinheit 13, mit dem ein paralleles Absenken anderer, an dem Schienenfahrzeug befindlicher Stromabnehmer initiiert werden kann.

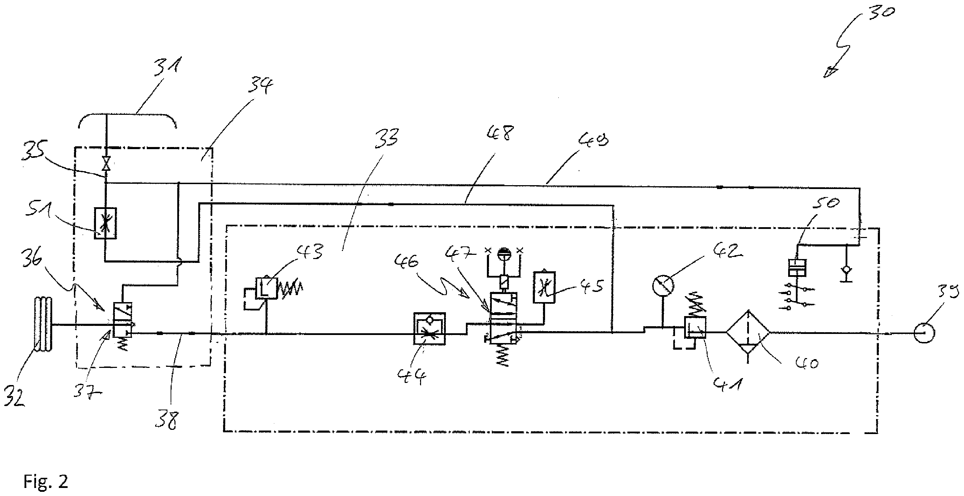

Die **Fig. 2** zeigt ein Antriebsystem 30 zum Anheben oder Absenken eines Schleifstücks 31 eines hier nicht näher dargestellten Stromabnehmers eines Schienenfahrzeugs über eine ebenfalls nicht gezeigte Positioniervorrichtung. Das Antriebsystem 30 umfasst einen Balgantrieb 32 zur Betätigung der Positioniervorrichtung sowie eine Steuereinheit 33 und eine Absenkeinheit 34 zur Entlüftung des Balgantriebs 32 und zum schnellen Absenken des Schleifstücks 31. Die Absenkeinheit 34 umfasst eine Detektorleitung 35 und ein Absenkventil 36 zur Entlüftung des Balgantriebs 32, welches hier als ein 3/2-Wegeventil 37 ausgebildet und in einer Versorgungsleitung 38 des Balgantriebs 32 angeordnet ist.

Die Steuereinheit 33 ist an einer Druckluftquelle 39 angeschlossen und weist die Versorgungsleitung 38 auf. Auch umfasst die Steuereinheit 33 einen Druckluftreiniger 40, einen Druckregler 41, ein Manometer 42, ein Überdruckventil 43, ein Drosselrückschlagventil 44 und ein weiteres Drosselventil 45. Weiter umfasst die Steuereinheit 33 ein Steuerventil 46, welches hier als 5/2-Wegeventil, das elektromagnetisch betätigbar und federrückstellbar ist, ausgebildet ist. Eine Funktion der Steuereinheit 33 entspricht überwiegend einer Funktion der in der **Fig. 1** beschriebenen Steuereinheit. Im Unterschied dazu ist hier die Detektorleitung 35 an eine zweite Versorgungsleitung 48 der Steuereinheit 33 angeschlossen, über die ein Arbeitsdruck in der Detektorleitung 35 ausgebildet wird. Die zweite Versorgungsleitung 48 ist daher nachfolgend dem Druckregler 41 und vor dem Steuerventil 46 an der Versorgungsleitung 38 angeschlossen. Auch ist an die Detektorleitung 35 eine Meldeleitung 49 mit einem Druckschalter 50 der Steuereinheit 33 angeschlossen.

Die Absenkeinheit 34 verfügt neben dem Absenkventil 36 über ein Drosselventil 51 in der zweiten Versorgungsleitung 48. Eine Füllung bzw. Druckerhöhung der Meldeleitung 49 und der Detektorleitung 35 erfolgt verlangsamt über die zweite Versorgungsleitung 48 und das Drosselventil 51. Das Drosselventil 51 kann hier alternativ auch als eine Blende bzw. Engstelle in der zweiten Versorgungsleitung 48 ausgebildet sein. Bei einem Druckverlust in der Detektorleitung 35 kann dann dieser Druckverlust nicht unmittelbar über die zweite Versorgungsleitung 48 ausgeglichen werden. Die Detektorleitung 35 ist an das 3/2-Wegeventil 37 angeschlossen und erlaubt eine Betätigung des 3/2-Wegeventils 37.

In der hier dargestellten Schaltposition wird über das 3/2-Wegeventil 37 der Balgantrieb 32 entlüftet. Diese Schaltposition wird durch eine Federrückstellung des 3/2-Wegeventils 37 erreicht, wenn ein Druckverlust in der Detektorleitung 35 vorliegt. Ist ein Arbeitsdruck in der Detektorleitung 35 erreicht, wird das 3/2-Wegeventil 37 in die zweite Schaltposition geschaltet, bei der die Versorgungsleitung 38 durchgeschaltet bzw. nicht mehr unterbrochen ist. Ein Anheben oder ein Absenken des Schleifstücks 31 mit dem Balgantrieb 32 ist dann ungehindert möglich.

## Patentansprüche

1. Antriebsystem (30) zum Anheben oder Absenken zumindest eines Schleifstücks (31) eines Stromabnehmers für Schienenfahrzeuge, wobei das Schleifstück an einer mit dem Antriebsystem verstellbaren Positioniervorrichtung des Stromabnehmers angeordnet und mit einer Andruckkraft zur Anlage gegen eine Fahrleitung bringbar ist, wobei das Antriebsystem einen mit Druckluft betätigbaren Balgantrieb (32) zur Betätigung der Positioniervorrichtung, eine pneumatische Steuereinheit mit einem Steuerventil (46) zur Zuleitung oder Abführung von Druckluft zu dem Balgantrieb, und eine Absenkeinheit (34) mit einer pneumatischen Detektorleitung (35) und einem Absenkventil (36) zur Entlüftung des Balgantriebs bei einem Druckverlust in der Detektorleitung umfasst, wobei das Absenkventil ein 3/2-Wegeventil (37) ist, wobei das Absenkventil in einer pneumatischen Versorgungsleitung (38) zwischen dem Steuerventil und dem Balgantrieb angeordnet ist.

2. Antriebsystem nach Anspruch 1,
**dadurch gekennzeichnet,**
**dass** das Absenkventil ein federrückstellbares 3/2-Wegeventil ist.

3. Antriebsystem nach Anspruch 1 oder 2,
**dadurch gekennzeichnet,**
**dass** das Absenkventil (36) pneumatisch über die Detektorleitung (35) betätigbar ist, derart, dass bei einem Arbeitsdruck in der Detektorleitung das Absenkventil die Versorgungsleitung (38) öffnet und bei einem Druckverlust in der Detektorleitung das Absenkventil die Versorgungsleitung gegenüber dem Steuerventil schließt und den Balgantrieb (32) entlüftet.

4. Antriebsystem nach einem der vorangehenden Ansprüche,
**dadurch gekennzeichnet,**
**dass** die Detektorleitung (35) an eine zweite pneumatische Versorgungsleitung (48) der Steuereinheit (33) zur Ausbildung des Arbeitsdrucks in der Detektorleitung angeschlossen ist, wobei in der zweiten Versorgungsleitung ein Drosselventil (51) der Absenkeinheit (34) angeordnet ist.

5. Antriebsystem nach Anspruch 4,
**dadurch gekennzeichnet,**
**dass** die zweite Versorgungsleitung (48) zwischen dem Steuerventil (46) und einer Druckluftquelle (39) oder dem Steuerventil und einem Druckregler (41) zur Ausbildung eines Arbeitsdrucks angeschlossen ist.

6. Antriebsystem nach einem der vorangehenden Ansprüche,
**dadurch gekennzeichnet,**
**dass** die Absenkeinheit (34) über eine pneumatische Meldeleitung (49) mit der Steuereinheit (33) verbunden ist, wobei die Meldeleitung an einen Druckschalter (50) der Steuereinheit und die Detektorleitung (35) angeschlossen ist.

7. Antriebsystem nach einem der vorangehenden Ansprüche,
**dadurch gekennzeichnet,**
**dass** die Steuereinheit (33) einen weiteren Druckschalter aufweist, der zwischen dem Steuerventil (46) und dem Balgantrieb (32) an der Versorgungsleitung (38) angeschlossen ist.

8. Antriebsystem nach einem der vorangehenden Ansprüche,
**dadurch gekennzeichnet,**
**dass** die Steuereinheit (33) an eine Druckluftquelle (39) anschließbar ist und einen Druckregler (41) zur Ausbildung eines Arbeitsdrucks aufweist.

9. Antriebsystem nach einem der vorangehenden Ansprüche,
**dadurch gekennzeichnet,**
**dass** das Steuerventil (46) ein 5/2-Wegeventil (47) ist, wobei das Steuerventil elektromagnetisch betätigbar ist.

10. Antriebsystem nach einem der vorangehenden Ansprüche,
**dadurch gekennzeichnet,**
**dass** die Steuereinheit (33) in der Versorgungsleitung (38) zumindest ein Drosselrückschlagventil (44) aufweist, wobei das Drosselrückschlagventil zwischen dem Steuerventil (46) und dem Balgantrieb (32) angeschlossen ist, wobei mit dem Drosselrückschlagventil dem Balgantrieb über die Versorgungsleitung zugeführte Druckluft drosselbar und von dem Balgantrieb abgeführte Druckluft durchleitbar ist oder umgekehrt.

11. Antriebsystem nach Anspruch 10,
**dadurch gekennzeichnet,**
**dass** die Steuereinheit (33) ein weiteres Drosselventil (45) aufweist, wobei mit dem weiteren Drosselventil dem Balgantrieb (32) über die Versorgungsleitung (38) zugeführte Druckluft oder dem Balgantrieb abgeführte Druckluft drosselbar ist.

12. Antriebsystem nach einem der vorangehenden Ansprüche,
**dadurch gekennzeichnet,**
**dass** die Steuereinheit (33), die Absenkeinheit (34) und der Balgantrieb (32) räumlich getrennt angeordnet sind.

13. Stromabnehmer mit einer Positioniervorrichtung, zumindest einem an der Positioniervorrichtung angeordneten Schleifstück (31) und einem pneumatischen Antriebsystem (30) nach einem der vorangehenden Ansprüche.

14. Verfahren zum Anheben oder Absenken zumindest eines Schleifstücks (31) eines Stromabnehmers für Schienenfahrzeuge mit einem Antriebssystem (30), wobei das Schleifstück an einer mit dem Antriebsystem verstellbaren Positioniervorrichtung des Stromabnehmers angeordnet und mit einer Andruckkraft zur Anlage gegen eine Fahrleitung gebracht wird, wobei die Positioniervorrichtung mit einem Balgantrieb (32) des Antriebsystems mit Druckluft betätigt wird, wobei von einem Steuerventil (46) einer pneumatische Steuereinheit (33) des Antriebsystems Druckluft zu dem Balgantrieb zugeleitet oder abgeführt wird, und wobei mit einer pneumatischen Detektorleitung (35) und einem Absenkventil (36) einer Absenkeinheit (34) des Antriebsystems bei einem Druckverlust in der Detektorleitung der Balgantrieb entlüftet wird, wobei als Absenkventil ein rückstellbares 3/2-Wegeventil (37) verwendet wird, wobei das Absenkventil in einer pneumatischen Versorgungsleitung (38) zwischen dem Steuerventil und dem Balgantrieb angeordnet wird.

15. Verfahren nach Anspruch 14,
**dadurch gekennzeichnet,**
**dass** bei einem erfolgten Druckverlust in der Detektorleitung (35) relativ zu einem vom einem Druckregler (41) der Steuereinheit (33) ausgebildeten Arbeitsdruck das Absenkventil (36) derart geschaltet wird, dass der Balgantrieb (32) unmittelbar über das Absenkventil entlüftet und das Schleifstück (31) abgesenkt wird.

16. Verfahren nach Anspruch 14 oder 15,
**dadurch gekennzeichnet,**
**dass** bei einer dicht abgeschlossenen Detektorleitung (35) diese mit Druckluft bis zum Erreichen eines von einem Druckregler (41) der Steuereinheit (33) ausgebildeten Arbeitsdrucks befüllt wird, wobei bei Erreichen des Arbeitsdrucks in der Detektorleitung das Absenkventil (36) derart geschaltet wird, dass der Balgantrieb (32) unmittelbar über die Versorgungsleitung (38) mit Druckluft angetrieben und das Schleifstück (31) angehoben wird.

## Claims

1. A drive system (30) for raising or lowering at least one sliding piece (31) of a current collector for rail vehicles, the sliding piece being disposed on a positioning device of the current collector, said positioning device being adjustable by the drive system, and the sliding piece being configured to be brought into contact with an overhead line using a contact pressure, the drive system comprising a bellows drive (32) which is configured to be actuated by means of compressed air for actuating the positioning device, the drive system comprising a pneumatic control unit having a control valve (46) for supplying or withdrawing compressed air to/from the bellows drive, and the drive system comprising a lowering unit (34) having a pneumatic detection line (35) and a lowering valve (36) for venting the bellows drive when pressure drops in the detection line, wherein the lowering valve is a 3/2-way valve (37), the lowering valve being disposed in a pneumatic supply line (38) between the control valve and the bellows drive.

2. The drive system according to claim 1,
**characterized in that**
the lowering valve is a 3/2-way valve with spring return.

3. The drive system according to claim 1 or 2,
**characterized in that**
the lowering valve (36) is configured to be pneumatically actuated via the detection line (35) in such a manner that, when there is an operating pressure in the detection line, the lowering valve opens the supply line (38) and, when pressure drops in the detection line, the lowering valve closes the supply line towards the control valve and vents the bellows drive (32).

4. The drive system according to any one of the preceding claims,
**characterized in that**
the detection line (35) is connected to a second pneumatic supply line (48) of the control unit (33) for forming the operating pressure in the detection line, a throttle valve (51) of the lowering unit (34) being disposed in the second supply line.

5. The drive system according to claim 4,
**characterized in that**
the second supply line (48) is connected between the control valve (46) and a compressed air source (39) or between the control valve and a pressure regulator (41) for forming an operating pressure.

6. The drive system according to any one of the preceding claims,
**characterized in that**
the lowering unit (34) is connected to the control unit (33) via a pneumatic signaling line (49), the signaling line being connected to a pressure switch (50) of the control unit and the detection line (35).

7. The drive system according to any one of the preceding claims,
**characterized in that**
the control unit (33) has an additional pressure switch which is connected to the supply line (38) between the control valve (46) and the bellows drive (32).

8. The drive system according to any one of the preceding claims,
**characterized in that**
the control unit (33) is connectable to a compressed air source (39) and has a pressure regulator (41) for forming an operating pressure.

9. The drive system according to any one of the preceding claims,
**characterized in that**
the control valve (46) is a 5/2-way valve (47), the control valve being configured to be actuated electromagnetically.

10. The drive system according to any one of the preceding claims,
**characterized in that**
the control unit (33) has at least one throttle check valve (44) in the supply line (38), the throttle check valve being connected between the control valve (46) and the bellows drive (32), the throttle check valve being able to throttle compressed air which is supplied to the bellows drive via the supply line and to allow compressed air which is withdrawn from the bellows drive to pass through or vice versa.

11. The drive system according to claim 10,
**characterized in that**
the control unit (33) has an additional throttle valve (45), the additional throttle valve being able to throttle compressed air which is supplied to the bellows drive (32) via the supply line (38) or compressed air which is withdrawn from the bellows drive.

12. The drive system according to any one of the preceding claims,
**characterized in that**
the control unit (33), the lowering unit (34) and the bellows drive (32) are disposed so as to be spatially separated from one another.

13. A current collector having a positioning device, at least one sliding piece (31) disposed on the positioning device and a pneumatic drive system (30) according to any one of the preceding claims.

14. A method for raising or lowering at least one sliding piece (31) of a current collector for rail vehicles with a drive system (30), the sliding piece being disposed on a positioning device of the current collector, said positioning device being adjustable by the drive system, and the sliding piece being brought into contact with an overhead line using a contact pressure, a bellows drive (32) of the drive system actuating the positioning device by means of compressed air, compressed air being supplied to or withdrawn from the bellows drive by means of a control valve (46) of a pneumatic control unit (33) of the drive system, and a pneumatic detection line (35) and a lowering valve (36) of a lowering unit (34) of the drive system venting the bellows drive when pressure drops in the detection line,
wherein a 3/2-way valve (37) with spring return is used as a lowering valve, the lowering valve being disposed in a pneumatic supply line (38) between the control valve and the bellows drive.

15. The method according to claim 14,
**characterized in that**
when pressure drops in the detection line (35) relative to an operating pressure formed by a pressure regulator (41) of the control unit (33), the lowering valve (36) is switched in such a manner that the bellows drive (32) is vented directly via the lowering valve and the sliding piece (31) is lowered.

16. The method according to claim 14 or 15,
**characterized in that**
when the detection line (35) is sealed tightly, said detection line (35) is filled with compressed air until an operating pressure formed by a pressure regulator (41) of the control unit (33) is reached, the lowering valve (36) being switched in such a manner when the operating pressure is reached in the detection line that the bellows drive (32) is directly driven by compressed air via the supply line (38) and the sliding piece (31) is raised.

## Revendications

1. Système d'entraînement (30) pour soulever ou abaisser au moins un frotteur (31) d'un appareil de prise de courant pour des véhicules ferroviaires, dans lequel le frotteur est disposé sur un dispositif de positionnement de l'appareil de prise de courant, ledit dispositif de positionnement étant ajustable par le système d'entraînement, et dans lequel le frotteur est capable de venir en contact avec une ligne de contact en utilisant une force de pression, dans lequel le système d'entraînement comprend un entraînement à soufflet (32), qui est actionnable au moyen d'air comprimé, pour actionner le dispositif de positionnement, une unité de commande pneumatique ayant une soupape de commande (46) pour amener ou évacuer de l'air comprimé à/de l'entraînement à soufflet, et une unité d'abaissement (34) ayant une conduite de détection (35) pneumatique et une soupape d'abaissement (36) pour purger l'entraînement à soufflet lors d'une perte de pression dans la conduite de détection,
dans lequel la soupape d'abaissement est un distributeur 3/2 (37), dans lequel la soupape d'abaissement est disposée dans une conduite d'alimentation (38) pneumatique entre la soupape de commande et l'entraînement à soufflet.

2. Système d'entraînement selon la revendication 1,
**caractérisé en ce que**
la soupape d'abaissement est un distributeur 3/2 à rappel par ressort.

3. Système d'entraînement selon la revendication 1 ou 2,
**caractérisé en ce que**
la soupape d'abaissement (36) est actionnable pneumatiquement via la conduite de détection (35) de manière que, lors d'une pression de fonctionnement dans la conduite de détection, la soupape d'abaissement ouvre la conduite d'alimentation (38) et, lors d'une perte de pression dans la conduite de détection, la soupape d'abaissement ferme la conduite d'alimentation par rapport à la soupape de commande et purge l'entraînement à soufflet (32).

4. Système d'entraînement selon l'une quelconque des revendications précédentes,
**caractérisé en ce que**
la conduite de détection (35) est raccordée à une deuxième conduite d'alimentation (48) pneumatique de l'unité de commande (33) pour former la pression de fonctionnement dans la conduite de détection, une soupape d'étranglement (51) de l'unité d'abaissement (34) étant disposée dans la deuxième conduite d'alimentation.

5. Système d'entraînement selon la revendication 4,
**caractérisé en ce que**
la deuxième conduite d'alimentation (48) est raccordée entre la soupape de commande (46) et une source (39) d'air comprimé ou la soupape de commande et un régulateur de pression (41) pour former une pression de fonctionnement.

6. Système d'entraînement selon l'une quelconque des revendications précédentes,
**caractérisé en ce que**
l'unité d'abaissement (34) est reliée à l'unité de commande (33) via une ligne de signalisation (49) pneumatique, la ligne de signalisation étant raccordée à un pressostat (50) de l'unité de commande et la conduite de détection (35).

7. Système d'entraînement selon l'une quelconque des revendications précédentes,
**caractérisé en ce que**
l'unité de commande (33) a un pressostat supplémentaire qui est raccordé à la conduite d'alimentation (38) entre la soupape de commande (46) et l'entraînement à soufflet (32).

8. Système d'entraînement selon l'une quelconque des revendications précédentes,
**caractérisé en ce que**
l'unité de commande (33) est capable d'être raccordée à une source (39) d'air comprimé et a un régulateur de pression (41) pour former une pression de fonctionnement.

9. Système d'entraînement selon l'une quelconque des revendications précédentes,
**caractérisé en ce que**
la soupape de commande (46) est un distributeur 5/2 (47), la soupape de commande étant actionnable électromagnétiquement.

10. Système d'entraînement selon l'une quelconque des revendications précédentes,
**caractérisé en ce que**
l'unité de commande (33) a au moins une soupape (44) antiretour d'étranglement dans la conduite d'alimentation (38), la soupape antiretour d'étranglement étant raccordée entre la soupape de commande (46) et l'entraînement à soufflet (32), la soupape antiretour d'étranglement permettant d'étrangler de l'air comprimé qui est amené à l'entraînement à soufflet via la conduite d'alimentation et de faire passer de l'air comprimé évacué de l'entraînement à soufflet ou inversement.

11. Système d'entraînement selon la revendication 10,
**caractérisé en ce que**
l'unité de commande (33) a une soupape d'étranglement (45) supplémentaire, la soupape d'étranglement supplémentaire permettant d'étrangler de l'air comprimé qui est amené à l'entraînement à soufflet (32) via la conduite d'alimentation (38) ou de l'air comprimé qui est évacué de l'entraînement à soufflet.

12. Système d'entraînement selon l'une quelconque des revendications précédentes,
**caractérisé en ce que**
l'unité de commande (33), l'unité d'abaissement (34) et l'entraînement à soufflet (32) sont disposés de manière à être spatialement séparés.

13. Appareil de prise de courant ayant un dispositif de positionnement, au moins un frotteur (31) disposé sur le dispositif de positionnement et un système d'entraînement (30) selon l'une quelconque des revendications précédentes.

14. Procédé pour soulever ou abaisser au moins un frotteur (31) d'un appareil de prise de courant pour des véhicules ferroviaires avec un système d'entraînement (30), dans lequel le frotteur est disposé sur un dispositif de positionnement de l'appareil de prise de courant, ledit dispositif de positionnement étant ajustable par le système d'entraînement, et dans lequel le frotteur vient en contact avec une ligne de contact en utilisant une force de pression, dans lequel le dispositif de positionnement est actionné par un entraînement à soufflet (32) du système d'entraînement au moyen d'air comprimé, de l'air comprimé étant amené à ou évacué de l'entraînement à soufflet par une soupape de commande (46) d'une unité de commande (33) pneumatique du système d'entraînement, et dans lequel une conduite de détection (35) pneumatique et une soupape d'abaissement (36) d'une unité d'abaissement (34) du système d'entraînement purgent l'entraînement à soufflet lors d'une perte de pression dans la conduite de détection,
dans lequel un distributeur 3/2 (37) à rappel est utilisé comme soupape d'abaissement, dans lequel la soupape d'abaissement est disposée dans une conduite d'alimentation (38) pneumatique entre la soupape de commande et l'entraînement à soufflet.

15. Procédé selon la revendication 14,
**caractérisé en ce que**
lorsqu'une perte de pression a eu lieu dans la conduite de détection (35) par rapport à une pression de fonctionnement formée par un régulateur de pression (41) de l'unité de commande (33), la soupape d'abaissement (36) est commutée de manière que l'entraînement à soufflet (32) est purgé directement via la soupape d'abaissement et le frotteur (31) est abaissé.

16. Procédé selon la revendication 14 ou 15,
**caractérisé en ce que**
lorsque la conduite de détection (35) est fermée de manière étanche, ladite conduite de détection (35) est remplie d'air comprimé jusqu'à ce qu'une pression de fonctionnement formée par un régulateur de pression (41) de l'unité de commande (33) soit atteinte, lorsque la pression de fonctionnement dans la conduite de détection est atteinte, la soupape d'abaissement (36) étant commutée de manière que l'entraînement à soufflet (32) est entraîné directement via la conduite d'alimentation (38) par de l'air comprimé et le frotteur (31) est soulevé.
